# EUROPEAN PATENT APPLICATION

(11) **EP 2 067 955 A2**
(43) Date of publication of application: **10.06.2009**
(21) Application number: 08167789.0
(22) Date of filing: 29.10.2008
(51) Int. Cl.: F02B 29/04

(54) **Intake-air cooling apparatus for internal combustion engine and automobile using the same**

(30) Priority: 06.12.2007 JP 2007316159
(71) Applicant: MITSUBISHI HEAVY INDUSTRIES, LTD., Tokyo 108-8215 (JP)
(72) Inventor: Noyama, Hideto, Iwatsuka-cho, Nakamura-ku Nagoya, Aichi-ken 453-8515 (JP); Aoki, Yasutaka, Nakamura-ku Nagoya, Aichi-ken 453-8515 (JP); Saito, Katsuhiro, Nakamura-ku Nagoya, Aichi-ken 453-8515 (JP)
(74) Representative: Intes, Didier Gérard André

(57) **Abstract**

There is provided an intake-air cooling apparatus (1) for an internal combustion engine which can be arranged compactly. The intake-air cooling apparatus (1) for an internal combustion engine is configured such that an intercooler (41) that cools intake air with outside air and an evaporator (43) that cools the intake air with refrigerant circulating through a refrigerant circuit are arranged in this order in an intake-air passage from a supercharger to the internal combustion engine, wherein the intercooler (41) is disposed in a duct (49) through which the outside air passes; the evaporator (43) is disposed in a case (51) through which the intake air passes; and one wall of the case (51) constitutes part of the duct (49).

## Description

### 1. FIELD OF THE INVENTION

The present invention relates to an intake-air cooling apparatus for an internal combustion engine and to an automobile using same.

### 2. DESCRIPTION OF RELATED ART

Internal combustion engines such as gasoline engines generally increase their output by increasing the amount of intake air using a supercharger.

When intake air is compressed by the supercharger, the temperature of the intake air rises to increase the temperature of air taken into the gasoline engine. This decreases the charging efficiency and increases the temperature of the air-fuel mixture, making it prone to knocking.

To reduce knocking, ignition timing is delayed or the air-fuel ratio of the air-fuel mixture is increased. This, however, leads to poor output and fuel economy.

Therefore, the intake air from the supercharger is generally cooled before being taken into the gasoline engine.

For efficient cooling, for example, Japanese Unexamined Utility Model Application, Publication No. 59-146531 proposes a charge cooler, provided downstream from a heat exchanger that cools intake air from the supercharger using outside air, for cooling the intake air using refrigerant that circulates in the refrigerant circuit of a vehicle-cabin air conditioner.

Since the engine compartment of an automobile is limited in space, the above components must be arranged as compactly as possible.

However, known coolers, as described in Japanese Unexamined Utility Model Application, Publication No. 59-146531, have no consideration of such a compact arrangement. For example, if a heat exchanger of a specified size cannot be installed, a small heat exchanger corresponding to the available space must be installed, so the cooling efficiency is correspondingly decreased.

Accordingly, compact arrangement of the components is one issue for practical use.

### BRIEF SUMMARY OF THE INVENTION

In consideration of the above problem, the present invention provides a compact intake-air cooling apparatus for an internal combustion engine and an automobile having the same.

To solve the above problem, the present invention adopts the following solutions.

A first aspect of the present invention is an intake-air cooling apparatus for an internal combustion engine in which an intercooler that cools intake air with outside air and an evaporator that cools the intake air with refrigerant circulating through a refrigerant circuit are arranged in this order in an intake-air passage from a supercharger to the internal combustion engine, wherein the intercooler is disposed in a duct through which the outside air passes; the evaporator is disposed in a case through which the intake air passes; and one wall of the case constitutes part of the duct.

According to the first aspect, the intercooler is disposed in a duct through which outside air passes; the evaporator is disposed in a case through which the intake air passes; and one wall of the case constitutes part of the duct. Accordingly, the intercooler and the evaporator are integrated into a single structure via the duct and the case. This allows the intercooler and the evaporator to be disposed compactly.

Moreover, since the one wall of the case constitutes part of the duct, the same structural member is used in common, allowing a more compact arrangement.

According to the first aspect, an inlet of the intake air to the case may be located at the one wall.

Since the inlet of the intake air to the case is located at the one wall, the outlet of the intake air is located on the opposite side of the one wall, in other words, at a position remote from the one wall.

This prevents the intake air cooled by the evaporator from coming into contact with the one wall, thereby preventing the intake air from being influenced by the outside air passing through the duct.

According to the first aspect, the one wall may constitute the top of the duct.

Since the one wall constitutes the top of the duct, the evaporator is disposed on the intercooler. The duct allows the outside air to pass therethrough in a substantially horizontal direction.

This arrangement is preferable for a floor-mounted arrangement which provides space in the vertical direction.

In the engine compartment of an automobile, for example, it is preferable to dispose the cooling apparatus on the frontmost floor (in front of the radiator and the condenser) in consideration of taking in outside air.

In this case, it is preferable to dispose the evaporator as close to horizontal as possible in consideration of vertical space.

With the above structure, the front of the side plates constituting the duct may have a notch under the case.

Since the front of the side plates constituting the duct has a notch under the case, the strength around the notch is lower than that of the other parts. Therefore, when a large front impact is applied to the cooling apparatus, the part around the notch is easily deformed. In other words, the case is separated from the duct to move rearward.

Thus, for example, when the cooling apparatus is disposed on the foremost floor of the engine compartment of an automobile, the impact of a collision can be absorbed. That is, this structure can be used as a crashable structure.

According to the first aspect, the one wall may constitute one side of the duct.

Since the one wall constitutes one side of the duct, the evaporator is disposed at the side of the intercooler.

In this case, the duct allows the outside air to pass therethrough substantially horizontally or substantially vertically. Therefore, it is preferable, in the engine compartment of an automobile, to dispose the cooling apparatus on the foremost floor or below the hood where horizontal space can be provided in consideration of taking in outside air.

When the cooling apparatus is disposed next to the engine, disposition of the case close to the engine reduces the influence of the engine, which acts as a heat source, on outside air taken into the intercooler, thus improving cooling efficiency.

In this case, it is preferable to dispose the evaporator as close to vertical as possible in consideration of lateral space.

According to the first aspect, the one wall may constitute the back of the duct.

Since the one wall constitutes the back of the duct, the evaporator is disposed behind the intercooler. The duct allows the outside air to pass therethrough substantially vertically.

For example, it is preferable, in the engine compartment of an automobile, to dispose the cooling apparatus under the hood in consideration of taking in outside air.

In this case, it is preferable to dispose the evaporator as close to horizontal as possible in consideration of vertical space.

In the above structure, the case may be arranged to be longer in the vertical direction so as to decrease a rearward protrusion.

For example, when the case is disposed at the rearmost part of the engine compartment, the outside air is taken in from the rear end of the hood. This arrangement is preferable when sufficient rear space cannot be ensured.

A second aspect of the present invention is an automobile equipped with the intake-air cooling apparatus for an internal combustion engine described above.

The use of the intake-air cooling apparatus which can be arranged compactly reduces situations in which the size is decreased to match the available space. This ensures sufficient cooling performance and, for example, improves the fuel economy and output of the gasoline engine.

According to the first aspect of the present invention, the intercooler is disposed in the duct through which outside air passes; the evaporator is disposed in the case through which the intake air passes; and one wall of the case constitutes part of the duct. Accordingly, the intercooler and the evaporator can be arranged compactly.

Moreover, since the one wall of the case constitutes part of the duct, the same structural member is used in common, allowing a more compact arrangement.

### BRIEF DESCRIPTION OF THE SEVERAL VIEWS OF THE DRAWINGS

Fig. 1 is a block diagram showing the schematic structure of an intake-air cooling apparatus 1 according to a first embodiment of the present invention;
Fig. 2 is a side view showing the overall schematic structure of an automobile equipped with the intake-air cooling apparatus according to the first embodiment of the present invention;
Fig. 3 is a perspective view showing the overall schematic structure of the intake-air cooling apparatus according to the first embodiment of the present invention;
Fig. 4 is a side view of the intake-air cooling apparatus according to the first embodiment of the present invention;
Fig. 5 is a side view of another form of the intake-air cooling apparatus according to the first embodiment of the present invention;
Fig. 6 is a side view of another form of the intake-air cooling apparatus according to the first embodiment of the present invention;
Fig. 7 is a side view of the schematic front structure of an automobile equipped with an intake-air cooling apparatus according to a second embodiment of the present invention;
Fig. 8 is a perspective view showing the overall schematic structure of the intake-air cooling apparatus according to the second embodiment of the present invention;
Fig. 9 is a front view showing the schematic front structure of an automobile equipped with an intake-air cooling apparatus according to a third embodiment of the present invention;
Fig. 10 is a perspective view showing the overall schematic structure of the intake-air cooling apparatus according to the third embodiment of the present invention;
Fig. 11 is a plan view of the intake-air cooling apparatus according to the third embodiment of the present invention;
Fig. 12 is a side view showing the schematic front structure of an automobile equipped with an intake-air cooling apparatus according to a fourth embodiment of the present invention; and
Fig. 13 is a perspective view showing the overall schematic structure of an intake-air cooling apparatus according to a fourth embodiment of the present invention.

### DETAILED DESCRIPTION OF THE INVENTION

### First Embodiment

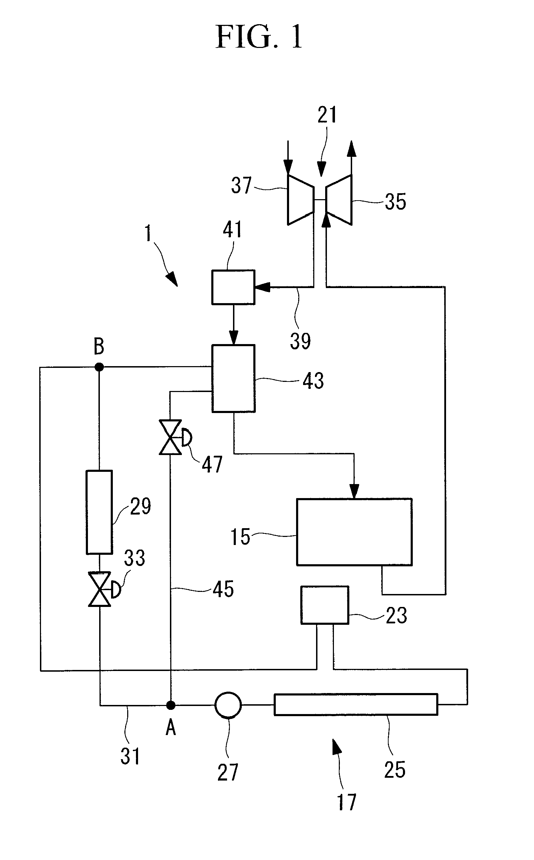

Referring to Figs. 1 to 6, an intake-air cooling apparatus for use in an automobile gasoline engine according to a first embodiment of the present invention will be described.

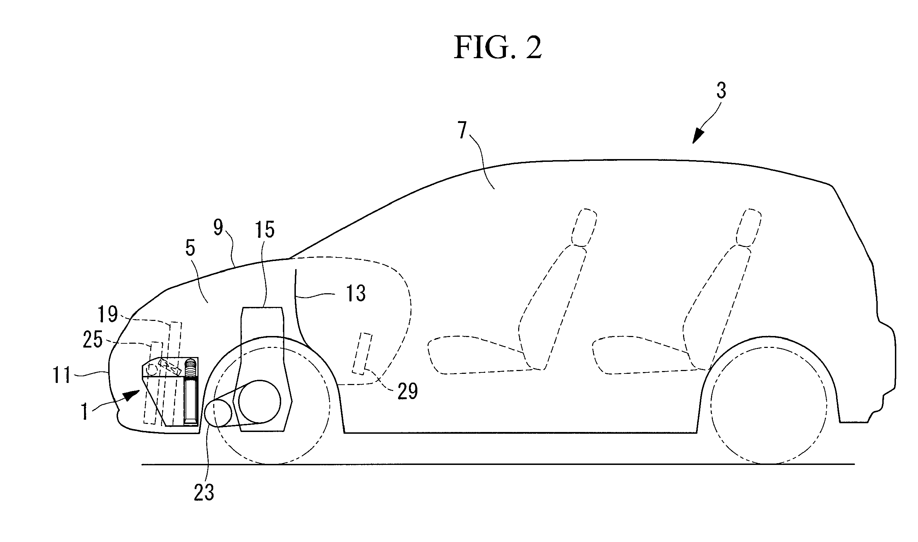

Fig. 1 is a block diagram showing the schematic structure of an intake-air cooling apparatus 1 according to this embodiment. Fig. 2 is a side view showing the overall schematic structure of an automobile 3 equipped with the intake-air cooling apparatus 1.

The automobile 3 includes an engine compartment 5 and a vehicle cabin 7. The engine compartment 5 forms a space, of which the top is a hood 9 that is partly openable, the front surface is a front grille 11 having an opening for taking in air from outside the automobile (outside air), and the rear is a firewall 13 that divides the space from the vehicle cabin 7.

The engine compartment 5 has in its interior a gasoline engine 15, a vehicle air conditioner 17 that controls the temperature in the vehicle cabin, a radiator 19 that is used to cool cooling water and lubricant, and a supercharger 21 that supplies compressed air to the gasoline engine 15.

The vehicle air conditioner 17 includes a compressor 23 that is rotated by the gasoline engine 15 to compress refrigerant to bring it to a high temperature and high pressure, a condenser 25 that exchanges heat between the refrigerant and outside air, a receiver 27 that distributes the liquid component of the refrigerant, and an evaporator 29 that exchanges heat between the air in the vehicle cabin 7 and the refrigerant.

A refrigeration circuit 31 is formed so as to circulate the refrigerant through the compressor 23, the condenser 25, and the evaporator 29. An expansion valve 33 that reduces the pressure of the refrigerant is provided at the condenser 25 side of the evaporator 29 in the refrigeration circuit 31.

The supercharger 21 is mainly composed of a turbine 35 rotatably driven by the exhaust gas from the gasoline engine 15 and a blower 37 coaxially connected to the turbine 35 and rotatably driven together with the rotation of the turbine 35 to compress air.

The air (intake air) compressed by the blower 37 is supplied to the gasoline engine 15 through an intake air passage 39.

The intake air passage 39 is equipped with the intake-air cooling apparatus 1. The intake-air cooling apparatus 1 includes an intercooler 41 that exchanges heat between the intake air and outside air and an evaporator 43 that exchanges heat between the refrigerant and the intake air circulating through the refrigeration circuit 31.

The refrigeration circuit 31 is equipped with a bypass refrigeration circuit (refrigerant circuit) 45 that connects point A downstream from the receiver 27 and point B downstream from the evaporator 29. The bypass refrigeration circuit 45 passes through the evaporator 43. The bypass refrigeration circuit 45 includes, upstream of the evaporator 43, a bypass expansion valve 47 that reduces the pressure of the refrigerant.

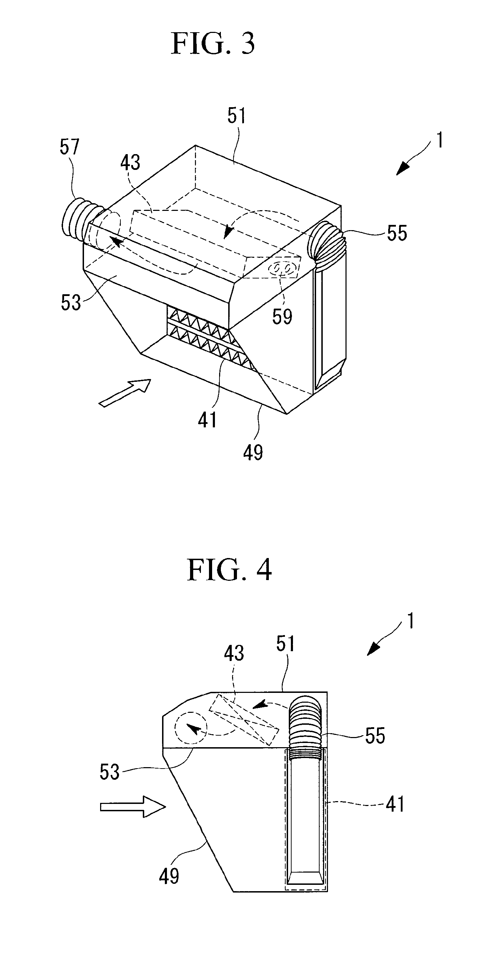

Fig. 3 is a perspective view showing the overall schematic structure of the intake-air cooling apparatus 1. Fig. 4 is a side view of the intake-air cooling apparatus 1.

As shown in Fig. 2, the intake-air cooling apparatus 1 is disposed at the side of the radiator 19 and the condenser 25.

The intercooler 41 is a tube-header type heat exchanger having the shape of a substantially rectangular parallelepiped. An outside-air duct (duct) 49 through which outside air passes is provided so as to enclose the intercooler 41.

The outside air introduced from the source device 11 moves rearward in a substantially horizontal direction along the outside-air duct 49 to cool the intake air flowing in the intercooler 41.

The intake air that is increased in temperature to about 120 to 130°C by the supercharger 21 is cooled to, for example, about 50 to 60°C by the intercooler 41.

A case 51 for housing the evaporator 43 is provided on the outside-air duct 49. The case 51 is a substantially rectangular parallelepiped hollow box, whose lower plate (one wall) 53 constitutes the top of the outside-air duct 49.

The evaporator 43 is a tube-head type heat exchanger having the shape of a rectangular parallelepiped.

The evaporator 43 has, on one side, a joint 59 to be connected to the bypass refrigeration circuit 45.

The evaporator 43 is supplied with partly gasified liquid refrigerant, reduced in pressure by the bypass expansion valve 47, through the bypass refrigeration circuit 45. This cools the intake air passing therethrough by adding latent heat of vaporization.

The bypass refrigeration circuit 45 is configured to allow the refrigerant to flow therethrough at all times while the vehicle air conditioner 17 is in operation.

The intake air cooled by the outside air through the intercooler 41 is introduced into the rear space of the case 51 through a pipe duct 55. The introduced intake air is further cooled to, for example, 30 to 40°C, by the evaporator 43 when moving into the front space through the evaporator 43.

The cooled intake air is supplied to the gasoline engine 15 through a pipe duct 57.

The intercooler 41 and the evaporator 43 may be plate-type heat exchangers.

Since the outside-air duct 49 and the case 51 are fixed together as described above, the intercooler 41 and the evaporator 43 are integrated into a single structure via the outside-air duct 49 and the case 51. Thus, the intercooler 41 and the evaporator 43 can be disposed compactly.

Moreover, since the top of the outside-air duct 49 is formed of the lower plate 53 of the case 51, this structural member is shared, thus allowing a more compact arrangement.

The arrangement in which the evaporator 43 is disposed above the intercooler 41, as in this embodiment, is suitable for a floor-mounted arrangement which provides space in the vertical direction, as shown in Fig. 2.

Since the intake-air cooling apparatus 1 is disposed behind the front grille 11, outside air can be efficiently taken in.

In this case, the evaporator 43 is disposed at an angle, providing space in the vertical direction.

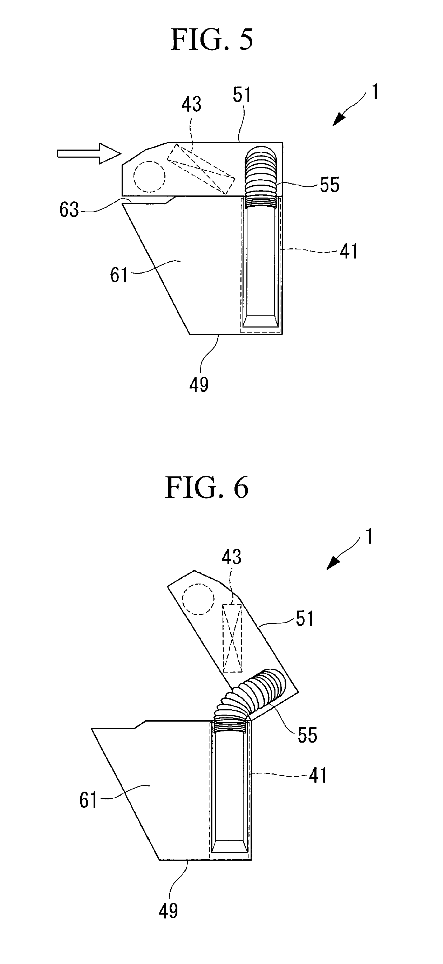

Figs. 5 and 6 show another form of the intake-air cooling apparatus 1 according to this embodiment. This intake-air cooling apparatus 1 has notches (cuts) 63 under the case 51 and at the front parts of side plates 61 that constitute both sides of the outside-air duct 49.

Since the front parts of the side plates 61 have the notches 63, the strength around the notches 63 is lower than that of the other parts.

Therefore, when a large front impact is applied to the intake-air cooling apparatus 1, the part around the notches 63 is easily deformed. In other words, the case 51 is separated from the outside-air duct 49 to move rearward, as shown in Fig. 6.

Thus, when the intake-air cooling apparatus 1 is disposed on the front floor of the engine compartment 5 of the automobile 3, the impact of a collision can be absorbed. That is, this structure can be used as a crashable structure. Second Embodiment

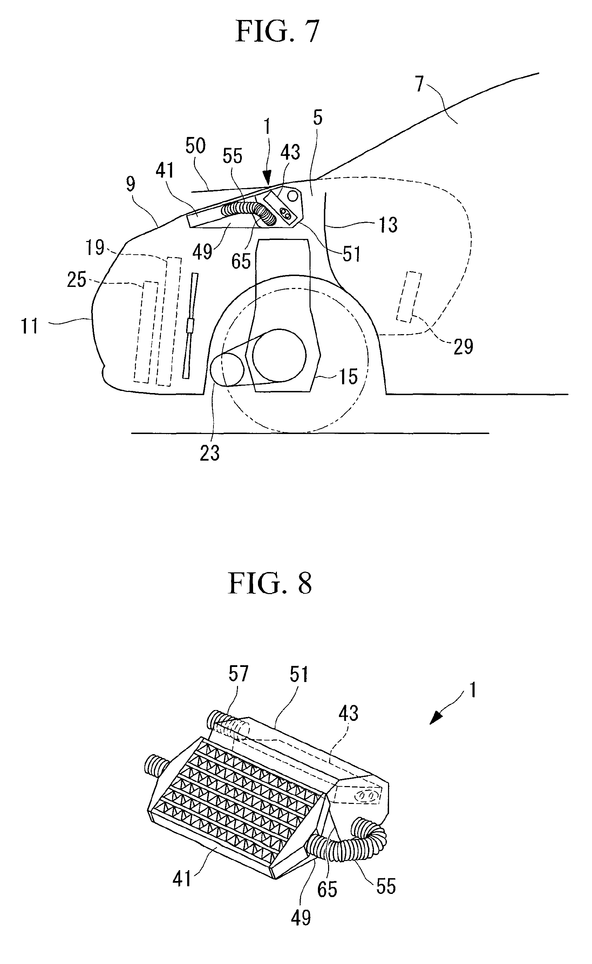

Referring to Figs. 7 and 8, a second embodiment of the present invention will be described next.

This embodiment is similar to the first embodiment in basic structure but different in the structure of the intake-air cooling apparatus 1. Thus, in this embodiment, only the difference will be described, and duplicated descriptions of the other parts will be omitted.

The same components as those of the first embodiment are given the same reference signs and their descriptions will be omitted.

Fig. 7 is a side view showing the schematic front structure of the automobile 3 equipped with the intake-air cooling apparatus 1. Fig. 8 is a perspective view showing the overall schematic structure of the intake-air cooling apparatus 1.

In this embodiment, the intake-air cooling apparatus 1 is disposed under the hood 9. The hood 9 is provided with an outside-air duct 50 having an opening and guiding outside air to the intercooler 41 and the outside-air duct 49 that guides the outside air from the intercooler 41 into the engine compartment 5.

The outside-air ducts 49 and 50 are configured to introduce outside air substantially vertically. As shown in Figs. 7 and 8, the intercooler 41 is inclined along the inclination of the hood 9; that is, it rests substantially horizontally.

A front plate (one wall) 65 of the case 51 constitutes the back of the outside-air duct 49. The case 51 and the outside-air duct 49 are fixed together.

Since the outside-air duct 49 and the case 51 are fixed together as described above, the intercooler 41 and the evaporator 43 are integrated into a single structure via the outside-air duct 49 and the case 51. Thus, the intercooler 41 and the evaporator 43 can be disposed compactly.

Moreover, since the top of the outside-air duct 49 is formed of the lower plate 53 of the case 51, this structural member is shared, thus allowing a more compact arrangement.

The evaporator 43 is disposed at an angle so as to rise forward in substantially a midpoint position of the case 51 in the front-to-back direction to partition the interior of the case 51 into two spaces, the front and rear spaces.

The intake air cooled by outside air through the intercooler 41 is introduced into the front space of the case 51 through the pipe duct 55. The introduced intake air is cooled by the evaporator 43 when moving into the rear space through the evaporator 43.

The cooled intake air is supplied to the gasoline engine 15 through the pipe duct 57.

Since the inlet of the intake air to the case 51 is located at the front plate 65 as described above, the intake air flows out from the rear space.

This prevents the intake air cooled by the evaporator 43 from coming into contact with the front plate 65, thereby preventing the intake air from being influenced by the outside air passing through the outside-air duct 49.

### Third Embodiment

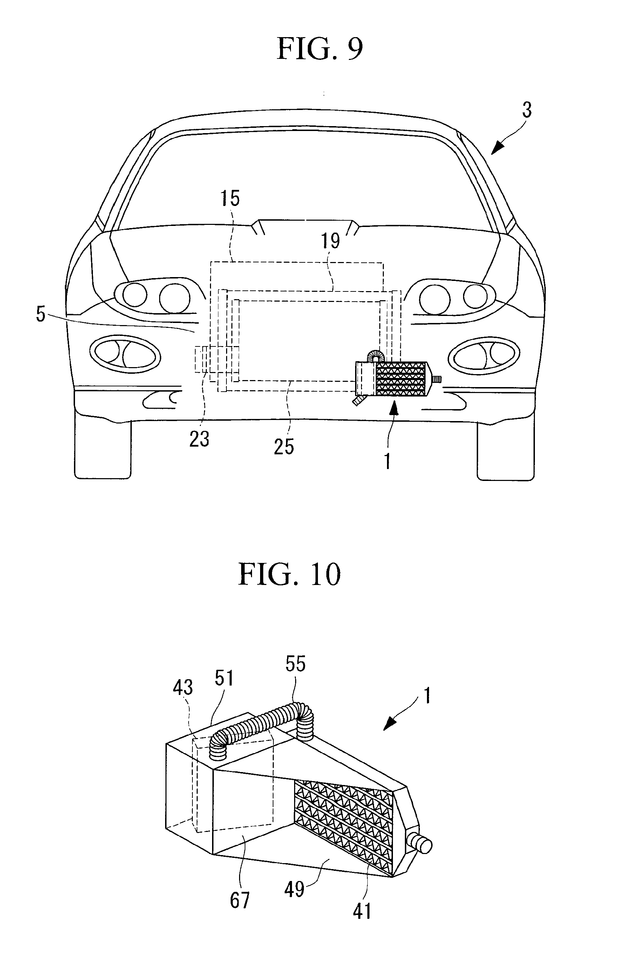

Referring to Figs. 9 to 11, a third embodiment of the present invention will be described.

This embodiment is similar to the first embodiment in basic structure but different in the structure of the intake-air cooling apparatus 1. Thus, in this embodiment, only the difference will be described, and duplicated descriptions of the other parts will be omitted.

The same components as those of the first embodiment are given the same reference signs and their descriptions will be omitted.

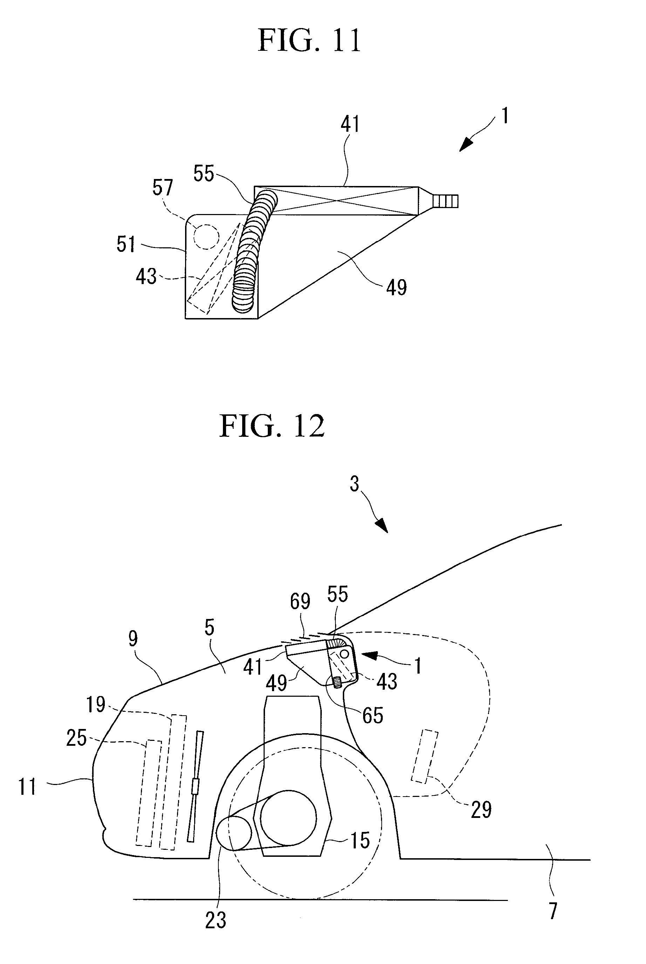

Fig. 9 is a front view showing the schematic front structure of the automobile 3 equipped with the intake-air cooling apparatus 1. Fig. 10 is a perspective view showing the overall schematic structure of the intake-air cooling apparatus 1. Fig. 11 is a plan view of the intake-air cooling apparatus 1.

In this embodiment, the intake-air cooling apparatus 1 is disposed in front of the condenser 25. This position provides space at one side, so that the case 51 is disposed at one side of the intercooler 41.

A side plate (one wall) 67 of the case 51 constitutes one side of the outside-air duct 49. The case 51 and the outside-air duct 49 are fixed together.

Since the outside-air duct 49 and the case 51 are fixed together as described above, the intercooler 41 and the evaporator 43 are integrated into a single structure via the outside-air duct 49 and the case 51. Thus, the intercooler 41 and the evaporator 43 can be disposed compactly.

Moreover, since the top of the outside-air duct 49 is formed of the side plate 67 of the case 51, this structural member is shared, thus allowing a more compact arrangement.

The evaporator 43 is disposed in substantially a midpoint position of the case 51 in the front-to-back direction such that the surfaces extend substantially vertically and rotate in a horizontal plane to partition the interior of the case 51 into two spaces, a distal space and a proximal space.

The intake air cooled by the outside air passing through the intercooler 41 is introduced into the near space in the case 51 via the pipe duct 55. This introduced intake air is cooled by the evaporator 43 while moving into the remote space via the evaporator 43.

This cooled intake air is supplied to the gasoline engine 15 through the pipe duct 57.

Since the inlet of the intake air to the case 51 is located at the side plate 67 as described above, the intake air flows out from the remote space.

This prevents the intake air cooled by the evaporator 43 from coming into contact with the side plate 67, thereby preventing the intake air from being influenced by the outside air passing through the outside-air duct 49.

### Fourth Embodiment

Referring to Figs. 12 to 13, a fourth embodiment of the present invention will be described.

This embodiment is similar to the first embodiment (and the second embodiment) in basic structure but different in the structure of the intake-air cooling apparatus 1. Thus, in this embodiment, only the difference will be described, and duplicated descriptions of the other parts will be omitted.

The same components as those of the first embodiment are given the same reference signs and their descriptions will be omitted.

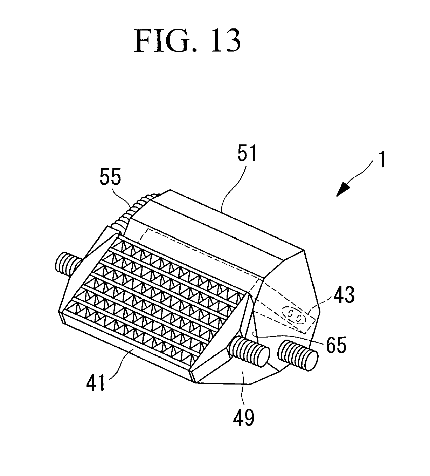

Fig. 12 is a side view showing the schematic front structure of the automobile 3 equipped with the intake-air cooling apparatus 1. Fig. 13 is a perspective view showing the overall schematic structure of the intake-air cooling apparatus 1.

In this embodiment, the intake-air cooling apparatus 1 is disposed at the rearmost part of the engine compartment 5.

The structure of the intake-air cooling apparatus 1 is substantially the same as that of the second embodiment. However, since the rear of the case 51 protrudes into the vehicle cabin 7, the intake-air cooling apparatus 1 is decreased in length in the front-to-back direction and increased in length correspondingly in the vertical direction to decrease the protrusion. The evaporator 43 is set up so as to extend as far vertically as possible from the bottom of the intercooler 41 to the bottom of the outside-air duct 49.

The front plate 65 of the case 51 constitutes the back of the outside-air duct 49. The case 51 and the outside-air duct 49 are fixed together.

Accordingly, the outside-air duct 49 is longer in the vertical direction than that of the second embodiment.

Since the rear of the case 51 protrudes into the vehicle cabin 7, the intercooler 41 is located at the rearmost part of the hood 9. This structure in which the case 51 is vertically long is also for the purpose of decreasing the protrusion of the case 51 into the vehicle cabin 7.

This part has the highest negative pressure, so that a large quantity of outside air is allowed to flow in merely by forming a grille 69 in the hood 9. This remarkably improves the cooling efficiency.

The other operations and advantages are the same as those of the second embodiment.

It is to be understood that the present invention is not limited to the above-described embodiments and may be modified as appropriate without departing from the sprit and scope of the present invention.

## Claims

1. An intake-air cooling apparatus (1) for an internal combustion engine in which an intercooler (41) that cools intake air with outside air and an evaporator (43) that cools the intake air with refrigerant circulating through a refrigerant circuit (31) are arranged in this order in an intake-air passage (39) from a supercharger (21) to the internal combustion engine, wherein:
the intercooler (41) is disposed in a duct (49) through which the outside air passes;
the evaporator (43) is disposed in a case (51) through which the intake air passes; and
one wall (53, 65, 67) of the case (51) constitutes part of the duct (49).

2. The intake-air cooling apparatus for an internal combustion engine according to Claim 1, wherein an inlet of the intake air to the case (51) is located at the one wall.

3. The intake-air cooling apparatus for an internal combustion engine according to Claim 1 or 2, wherein the one wall (53) constitutes the top of the duct (49).

4. The intake-air cooling apparatus for an internal combustion engine according to Claim 3, wherein the front of the side plates (61) constituting the duct (49) has a notch (63) under the case (51).

5. The intake-air cooling apparatus for an internal combustion engine according to Claim 1, wherein the one wall (67) constitutes one side of the duct (49).

6. The intake-air cooling apparatus for an internal combustion engine according to Claim 1, wherein the one wall (65) constitutes the back of the duct (49).

7. The intake-air cooling apparatus for an internal combustion engine according to Claim 6, wherein the case (51) is arranged to be longer in the vertical direction so as to decrease a rearward protrusion.

8. An automobile equipped with the intake-air cooling apparatus for an internal combustion engine according to any one of Claims 1 to 7.
